**Europäisches Patentamt**

**European Patent Office**

**Office européen des brevets**

(19)

(11) Veröffentlichungsnummer: **0 099 498**
A2

(12) # EUROPÄISCHE PATENTANMELDUNG

(21) Anmeldenummer: **83106445.6**

(22) Anmeldetag: **01.07.83**

(51) Int. Cl.³: **G 01 W 1/14**
**G 01 W 1/00**

(30) Priorität: **01.07.82 DE 8218893 U**

(43) Veröffentlichungstag der Anmeldung:
**01.02.84 Patentblatt 84/5**

(84) Benannte Vertragsstaaten:
**AT BE CH DE FR IT LI NL SE**

(71) Anmelder: **Lang, Heinz**
**Savoyenstrasse 19**
**D-8000 München(DE)**

(72) Erfinder: **Lang, Heinz**
**Savoyenstrasse 19**
**D-8000 München(DE)**

(74) Vertreter: **Wuesthoff, Franz, Dr.-Ing. et al,**
**Patentanwälte Wuesthoff -v. Pechmann-Behrens-Goetz**
**Schweigerstrasse 2**
**D-8000 München 90(DE)**

(54) **Niederschlagsmessgerät.**

(57) Ein Tragkörper (31), der mit einem Schaft (35) im Erdboden verankerbar ist, stützt einen biegbaren Arm (32) ab, an dessen Ende zwei Elektroden (33,44) voneinander isoliert befestigt sind. Die Höhe der Elektroden (33,44) über dem Erdboden läßt sich durch Biegen des Arms (32) einstellen. Die Elektroden (33,44) sind beheizbar und sind mit Ausnahme ihrer nach unten abgewinkelten freien Enden (51,52) isoliert. Wenn bei einem Schneefall die Schneehöhe die freien Enden (51,52) erreicht, bildet sich zwischen diesen eine elektrisch leitende Brücke, so daß sich über die Elektroden (33,44) ein Stromkreis schließt, der beispielsweise ein Alarmgerät betätigt.

EP 0 099 498 A2

./...

FIG. 2

PATENTANWÄLTE

WUESTHOFF - v. PECHMANN - BEHRENS - GOETZ

EUROPEAN PATENT ATTORNEYS

DR.-ING. FRANZ WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING.; DIPL.-WIRTSCH.-ING. RUPERT GOETZ

D-8000 MÜNCHEN 90
SCHWEIGERSTRASSE 2

TELEFON: (089) 66 20 51
TELEGRAMM: PROTECTPATENT
TELEX: 5 24 070

**0099498**

EP-57 371
Heinz Lang
01. Juli 1983

## Niederschlagsmeßgerät

Die Erfindung betrifft ein Niederschlagsmeßgerät mit einem Tragkörper und mindestens zwei mit Abstand voneinander am Tragkörper abgestützten Elektroden, die einen Stromkreis schließen, wenn angesammelter Niederschlag den Abstand zwischen ihnen überbrückt.

Ein bekanntes Niederschlagsmeßgerät dieser Gattung (DE-GM 1 713 059) ist als Regenzelle zur Betätigung eines elektrodischen Stromkreises, beispielsweise des Antriebsstromkreises einer Markise, ausgebildet und hat als Tragkörper ein oben offenes kastenförmiges Gehäuse, in dem zwei ebene Elektroden waagerecht übereinander befestigt sind. Von den beiden Elektroden ist die untere von einer Platte und die obere von einem Drahtgeflecht gebildet, so daß Regen durch die obere Elektrode fallen und sich auf der unteren sammeln kann, bis er schließlich eine Höhe erreicht hat, bei der er eine elektrisch leitende Brücke zwischen den beiden Elektroden bildet und dadurch über diese Elektroden einen Stromkreis schließt.

Dieses bekannte Gerät kann auf Niederschlag in Form von Schnee nicht oder nur unzuverlässig reagieren, da Schneeflocken sich auf der gitterförmigen oberen Elektrode absetzen könnnen, ohne daß der Zwischenraum zwischen den beiden Elektroden mit Schnee angefüllt ist; infolgedessen kann es vorkommen, daß der Stromkreis zwischen den beiden Elektroden auch noch nach einem Schneefall offenbleibt, dessen Höhe größer ist als der Abstand zwischen den beiden Elektroden.

Es besteht jedoch seit langem ein dringendes Bedürfnis nach einem auf Schneefälle reagierenden Niederschlagsmeßgerät, das beispielsweise im Rahmen des Straßendienstes im Winter ein Signal abgibt, wenn Neuschnee eine Höhe erreicht hat, bei der Straßen geräumt und/oder gestreut werden müssen. Von besonderer Bedeutung ist dabei eine nächtliche Überwachung, die dem Winterdienstpersonal einerseits die Last erspart, den Schlaf vorsorglich zur Beobachtung der Schneehöhe regelmäßig zu unterbrechen und andererseits das Risiko vermeidet, daß eine nötige Schneehöhenmeldung unterlassen oder verspätet abgegeben wird.

Der Erfindung liegt deshalb die Aufgabe zugrunde, ein Niederschlagsmeßgerät der eingangs beschriebenen Gattung derart weiterzubilden, daß es zuverlässig auf Schneefälle reagiert, die eine bestimmte, entsprechend den örtlichen Verhältnissen einstellbare Höhe erreichen.

Die Aufgabe ist erfindungsgemäß dadurch gelöst, daß wenigstens eine Elektrode an einem vom Tragkörper wegragenden, höhenverstellbaren Arm angeordnet ist.

Die wenigstens eine an dem Arm angeordnete Elektrode läßt sich innerhalb der durch die Höhenverstellbarkeit des Arms gegebenen Grenzen auf jede beliebige Schneehöhe einstellen, bei welcher der Stromkreis durch eine Schneebrücke zwischen den Elektroden geschlossen werden soll. Der Stromkreis kann an einer von dem Niederschlagsmeßgerät beliebig weit entfernten Stelle beispielsweise einen optischen und/oder akustischen Signalgeber enthalten, der Straßen- oder Bahndienstpersonal darauf aufmerksam macht, daß auf einer Straße oder Bahnstrecke, an der das Niederschlagsmeßgerät aufgestellt worden ist, der Schnee eine Höhe erreicht hat, bei der geräumt oder ein Taumittel eingesetzt werden muß.

Anstelle eines Signalgebers oder zusätzlich zu diesem kann der Stromkreis, der durch eine Schneebrücke zwischen den Elektroden des erfindungsgemäßen Niederschlagsmeßgeräts geschlossen wird, ein Relais enthalten, das beispielsweise eine elektrische Heizung einschaltet, die in eine Fahrbahndecke oder Eisenbahnweiche eingebaut ist.

Vorzugsweise ist der Tragkörper mit einem in den Erdboden einschraubbaren oder einschlagbaren Dorn verankerbar. Dadurch läßt sich mit Sicherheit ausschließen, daß das erfindungsgemäße Meßgerät infolge der Belastung durch den mehr oder weniger weit ausladenden höhenverstellbaren Arm oder durch Windkräfte gekippt und die Schneehöhenmessung dadurch verfälscht wird.

Der Tragkörper ist zweckmäßigerweise ein in Verankerungsstellung senkrechtes Rohr, an dem eine auf dem Boden aufliegende Bodenplatte befestigt ist.

Die Entscheidung, ob im Straßendienst geräumt oder gestreut werden muß, hängt neben der Neuschneehöhe auch von Temperaturen ab. Beispielsweise kann bei hoher Lufttemperatur nach einem kurzen, aber heftigen Schneefall von Räumarbeiten abgesehen werden, wenn damit gerechnet werden kann, daß der entsprechend nasse Schnee rasch taut oder durch dichten Fahrzeugverkehr von der überwachten Fahrbahn weggeschleudert wird. Andererseits sind Räum-und/oder Streumaßnahmen selbt bei geringer Schneehöhe dann erforderlich, wenn die Temperatur an der Bodenoberfläche nahe oder unter Null liegt. Aus diesen Gründen ist es vorteilhaft, wenn bei dem erfindungsgemäßen Niederschlagsmeßgerät am oberen Ende des Tragkörpers und an der Bodenplatte je ein Meßfühler für die Luft- bzw. Bodentemperatur angeordnet ist.

Die Bodenplatte kann als Elektrode ausgebildet sein. In diesem Fall genügt es, wenn an dem höhenverstellbaren Arm nur eine Elektrode angeordnet ist; an dem Arm können aber auch in unterschiedlichen Höhen mehrere Elektroden angeordnet sein, die mit der Bodenplatte und/oder miteinander durch mehrere Stromkreise zur Anzeige mehrerer Schneehöhen verbunden sind.

Der höhenverstellbare Arm ist vorzugsweise biegbar, so daß die mindestens eine an ihm angeordnete Elektrode sich in jeder Stellung des Arms nach unten richten läßt. Dabei kann der höhenverstellbare Arm insgesamt schwanenhalsartig biegbar sein oder zwei Biegegelenke aufweisen.

Für den Fall, daß mit sehr trockenem Schnee gerechnet werden muß, dessen Leitfähigkeit gering ist, kann die Erfindung dadurch weitergebildet sein, daß die Elektroden paarweise am höhenverstellbaren Arm angeordnet sind und mindestens eine Elektrode des oder jedes Paars elektrisch beheizbar ist. Bei dieser Anordnung der Elektroden läßt sich deren Abstand voneinander beliebig kleinhalten, denn er ist unabhängig von der Einstellung des höhenverstellbaren Arms. Durch Beheizen mindestens einer Elektrode kann in deren Umgebung der Schnee angetaut werden, so daß er eine zuverlässig leitende Brücke zwischen den Elektroden bildet, sobald die Schneehöhe die Elektroden erreicht hat.

Vorzugweise sind beide Elektroden nach unten abgewinkelt und mit Ausnahme ihrer freien Enden elektrisch isoliert. Dadurch wird verhindert, daß dicke Schneeflocken, die auf den Elektroden liegenbleiben, zwischen diesen eine elektrisch leitende Brücke bilden und eine tatsächlich nicht vorhandene, bis zu den Elektroden reichende Schneehöhe vortäuschen.

Ausführungsbeispiele der Erfindung werden im folgenden anhand schematischer Zeichnungen mit weiteren Einzelheiten erläutert. Es zeigt:

Fig.1    ein erstes Niederschlagsmeßgerät, teilweise in einem senkrechten Schnitt,

Fig.2    ein zweites Niederschlagsmeßgerät in Seitenansicht,

Fig.3    Die Ansicht in Richtung des Pfeils III in Fig.2,

Fig.4    den waagerechten Teilschnitt IV-IV in Fig.3 und

Fig.5    den senkrechten Teilschnitt V-V in Fig.3.

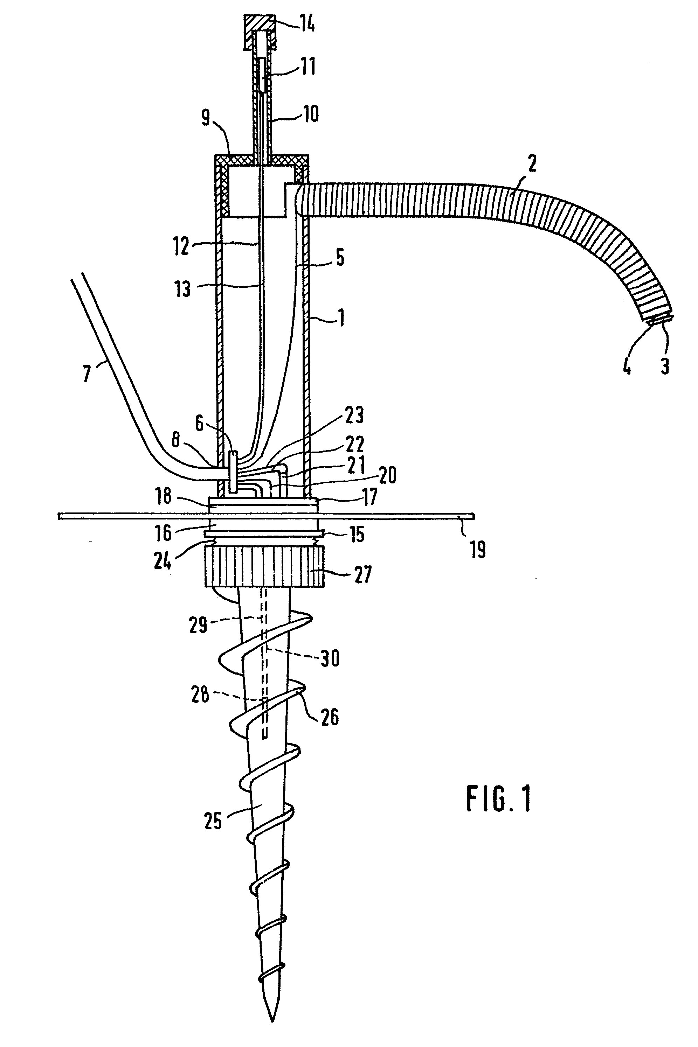

Das in Fig.1 dargestellte Niederschlagsmeßgerät weist einen Tragkörper 1 in Form eines zylindrischen Rohrs auf. Am oberen Ende des Tragkörpers 1 ist seitlich ein Ende eines Arms 2 befestigt. Dieser Arm 2 ist ein schwanenhalsartiges Rohr mit einer Vielzahl von relativ zueinander bewegbaren Teilen und einer elastischen Ummantelung, so daß der Arm in eine beliebig gebogene, stabile Betriebsstellung gebracht werden kann.

Am freien Ende des Arms 2 ist eine Elektrode 3 befestigt, die in einen Isolierstopfen 4 eingeschraubt und durch entsprechende Verformungen des Arms 2 höhenverstellbar ist. Die Elektrode 3 ist mit einem Leiter 5 verbunden, der durch den Arm 2 in den Tragkörper 1 geführt und an eine dort angeordnete Klemme 6 angeschlossen ist. Von der Klemme 6 geht ein Anschlußkabel 7 aus, das durch eine Durchführung 8 des Tragkörpers 1 nach außen geführt ist.

Das obere Ende des Tragkörpers 1 ist mit einem Stopfen 9 verschlossen. In eine zentrale Öffnung des Stopfens 9 ist ein aufragender rohrförmiger Fortsatz 10 eingesetzt, der einen als Halbleiter-Thermometer ausgebildeten Meßfühler 11 aufnimmt, welcher über Leiter 12 und 13 an die Klemme 6 angeschlossen ist. Das obere Ende des Fortsatzes 10 ist durch eine Kappe 14 verschlossen.

Auf das untere Ende des Tragkörpers 1 ist ein Schraubteil 15 aus Kunststoff aufgeschraubt, das zwei sich gegenüberliegende parallele Abflachungen 16 zum Ansetzen eines Werkzeugs aufweist. Zwischen einer Außenumfangsschulter am unteren Ende des Tragkörpers 1 und dem Schraubteil 15 sind, in der Reihenfolge von oben nach unten, ein metallischer Stützring 17, eine isolierende Ringscheibe 18 und eine ringförmige Bodenplatte 19 eingespannt. Die Bodenplatte 19 ist als Elektrode ausgebildet und über einen Leiter 20 mit der Klemme 6 verbunden.

Am unteren Ende des Tragkörpers 1 ist ein ebenfalls als Halbleiter-Thermometer ausgebildeter Meßfühler 21 angeordnet, der in Wärmekontakt mit der Bodenplatte 19 steht und über Leiter 22 und 23 mit der Klemme 6 verbunden ist.

Das untere Ende des Schraubteils 15 ist mit einem Außengewinde 24 versehen, auf das ein hohler Dorn 25 aufgeschraubt ist. Der Dorn 25 hat ein Schneidgewinde 26 zum Einschrauben in den Erdboden und weist an seinem oberen Ende einen einstückig angeformten Schraubkopf 27 mit einem Innengewinde und einer Rändelung am Außenumfang auf. Der Dorn 25 nimmt in einem vorbestimmten Abstand von beispielsweise 5 cm unterhalb der Bodenplatte 19 einen als Halbleiter-Thermometer ausgebildeten Meßfühler 28 auf, der über Leiter 29 und 30 mit der Klemme 6 verbunden ist.

Zum Betrieb des in Fig.1 dargestellten Niederschlagsmeßgeräts wird der Dorn 15 in den Erdboden soweit eingeschraubt, bis die Bodenplatte 19 auf der Erdoberfläche
aufliegt. Durch Biegen des Arms 2 wird die Elektrode 3
mit Bezug auf die Bodenplatte 19 in eine Höhenstellung
gebracht, die der Schneehöhe entspricht, bei der Alarm
ausgelöst werden soll. Das Anschlußkabel 7 wird mit einer
nicht dargestellten Anzeige- und Alarmeinrichtung verbunden, die am Aufenthaltsort einer für die Überwachung verantwortlichen Person aufgestellt ist.

Geeignete Anzeige- und Alarmeinrichtungen mit beispielsweise akustischer Signalgabe sind bekannt. Für das vorstehend beschriebene Niederschlagsmeßgerät eignet sich
beispielsweise eine an das öffentliche Stromnetz anschaltbare Einrichtung, die beim Schließen des Stromkreises zwischen den Elektroden 3 und 19 mit ihren Leitern 5
bzw. 20 einen abschaltbaren Dauersignalton erzeugt. Die
Einrichtung kann ferner zweckmäßigerweise mit einer LCD--
Temperaturanzeige versehen sein, die beim Niederdrücken
entsprechender Fernabfrageknöpfe die Lufttemperatur am
Meßfühler 11, die Erdoberflächentemperatur am Meßfühler
21 bzw. die Bodentemperatur in vorbestimmter Tiefe am
Meßfühler 28 anzeigt.

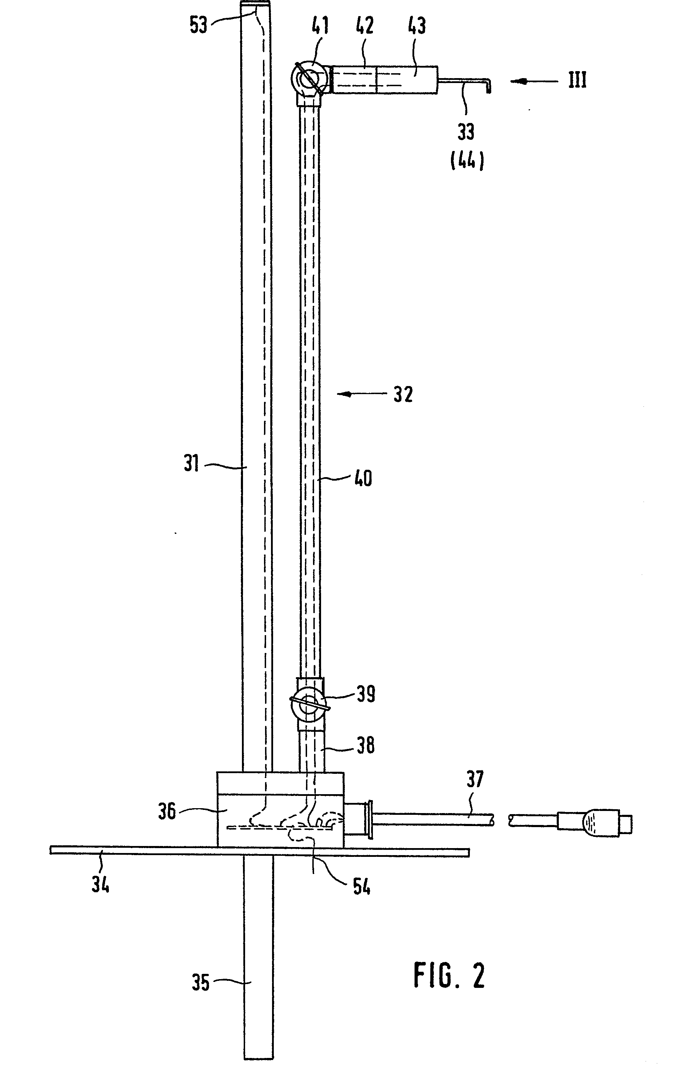

Das Niederschlagsmeßgerät gemäß Fig.2 bis 5 hat ebenso
wie das in Fig.1 dargestellte einen Tragkörper 31 und
einen daran abgestützten höhenverstellbaren Arm 32 mit an
dessen freiem Ende angeordneter Elektrode 33. Der Tragkörper 31 ist hier jedoch von einem schlanken Rohr gebildet, an dem eine Bodenplatte 34 befestigt ist und einen
von demselben Rohr gebildeten Schaft 35 nach oben begrenzt. Der Schaft 35 läßt sich in einen nicht dargestellten, rohrförmigen Dorn einstecken, der in den Erdboden einschlagbar oder ähnlich dem in Fig.1 dargestellten Dorn 25 einschraubbar sein kann. Das Niederschlagsmeßgerät wird vorzugsweise so angeordnet, daß die Bodenplatte 34 auf dem Erdboden aufliegt. Auf der Bodenplatte
34 ist ein Klemmengehäuse 36 angeordnet, das fest mit dem
Tragkörper 31 verbunden ist und dessen unteren Bereich
umschließt. Aus dem Klemmengehäuse 36 ist ein Anschlußkabel 37 herausgeführt, das zu einem in beliebigem Abstand angeordneten Signalauswertungs- und Warngerät
führt.

Der Arm 32 ist im Gegensatz zu dem in Fig.1 dargestellten
Arm 2 nicht insgesamt biegbar, sondern weist mehrere in
sich starre Bauteile auf, nämlich ein unteres Teil 38,
das am Klemmengehäuse 36 befestigt und über dieses mit
dem Tragkörper 31 starr verbunden sowie über ein feststellbares erstes Biegegelenk 39 mit einem mittleren Teil
40 des Arms 32 verbunden ist. Das mittlere Teil 40
ist durch ein zweites feststellbares Biegegelenk 41 mit
einem oberen Teil 42 verbunden. Die drei Teile 38, 40 udn
42 sind starre Rohrstücke; das mittlere Teil 40 ist
erheblich länger als das untere Teil 38 und das obere
Teil 42.

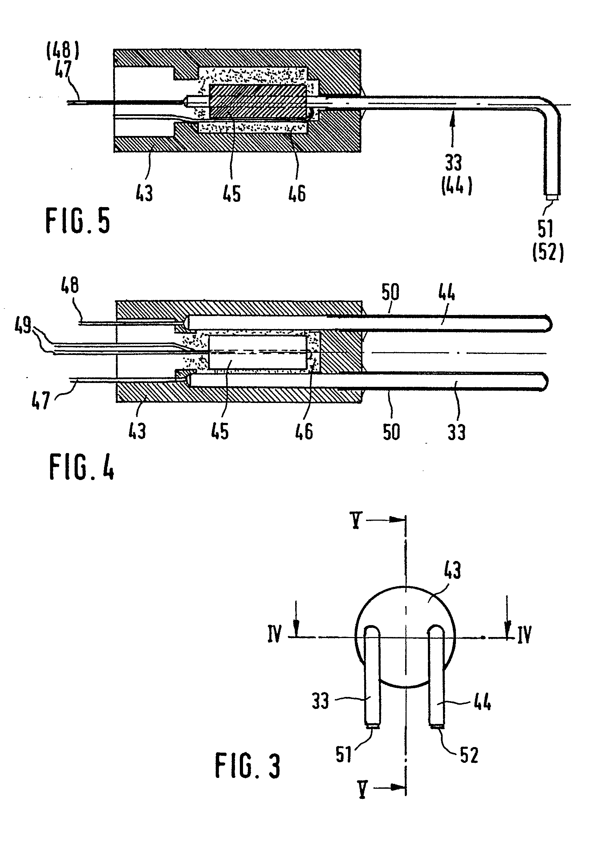

Das obere Teil 42 des Arms 32 weist einen in Fig.3 bis 5
vergrößert dargestellten Isolierkörper 43 auf, in dem neben der Elektrode 33 und parallel zu dieser eine zweite
Elektrode 44 befestigt ist. Die inneren Abschnitte der
beiden Elektroden 33 und 44 sowie ein zwischen diesen angeordneter Heizkörper 45 sind in eine wärmeleitende,
elektrisch isolierende Masse 46 eingebettet. Die beiden
Elektroden 33 und 44 sind über je einen isolierten Leiter
47 bzw. 48 mit dem Klemmengehäuse 36 und weiter über das
Anschlußkabel 37 mit einer Niederspannungsquelle in dem
erwähnten Signalauswertungs- und Warngerät verbunden.
Zwischen den Elektroden 33 und 44 wird im Betrieb ständig
ein Potential von beispielsweise 60 Volt aufrechterhalten, das einen Strom fließen läßt, sobald sich zwischen den Elektroden eine elektrisch leitende Schneebrücke gebildet hat.

Eine ausreichende Leitfähigkeit einer solchen Schneebrücke ist dadurch gewährleistet, daß die beiden Elektroden 33 und 44 zumindest bei Lufttemperaturen, bei denen mit trockenem Schnee gerechnet werden muß, ständig vom Heizkörper 45 erwärmt werden, der über ein Leitungspaar 49 mit dem Klemmengehäuse 36 und weiter über das Anschlußkabel 37 ebenfalls mit dem Signalauswertungs- und Alarmgerät verbunden ist.

Die beiden Elektroden 33 und 44 ragen waagerecht aus dem Isolierkörper 43 heraus, sind in einem Abstand von diesem nach unten abgewinkelt und weisen auf nahezu ihrer gesamten Länge eine Isolation 50 auf, die nur die nach unten weisenden freien Enden 51 und 52 der Elektroden freiläßt. Eine Schneebrücke kann deshalb nur dann die beiden Elektroden 33 und 44 elektrisch leitend verbinden, wenn sie sich an deren freien Enden 51 und 52 bildet, was nur von unten her, bei entsprechender Schneehöhe, möglich ist.

Am oberen Ende des rohrförmigen Tragkörpers 31 ist, ähnlich wie bei der in Fig.1 dargestellten Ausführungsform, ein Meßfühler 53 für die Lufttemperatur angeordnet; ein weiterer Meßfühler 54 zum Feststellen der Temperatur an der Bodenoberfläche ist an der Bodenplatte 34 angeordnet.

5676

PATENTANWÄLTE

WUESTHOFF - v. PECHMANN - BEHRENS - GOETZ

EUROPEAN PATENT ATTORNEYS

DR.-ING. FRANZ v. WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING.; DIPL.-WIRTSCH.-ING. RUPERT GOETZ

D-8000 MÜNCHEN 90
SCHWEIGERSTRASSE 2

TELEFON: (089) 66 20 51
TELEGRAMM: PROTECTPATENT
TELEX: 5 24 070

EEP-57 371

Heinz Lang

01. Juli 1983

P a t e n t a n s p r ü c h e

1. Niederschlagsmeßgerät mit einem Tragkörper (1;31) und mindestens zwei mit Abstand voneinander am Tragkörper abgestützten Elektroden (3,19; 33,44), die einen Stromkreis schließen, wenn angesammelter Niederschlag den Abstand zwischen ihnen überbrückt,
d a d u r c h   g e k e n n z e i c h n e t ,
daß wenigstens eine Elektrode (3;33,44) an einem vom Tragkörper (1;31) wegragenden, höhenverstellbaren Arm (2; 32) angeordnet ist.

2. Niederschlagsmeßgerät nach Anspruch 1,
d a d u r c h   g e k e n n z e i c h n e t ,
daß der Tragkörper (1; 31) mit einem in den Erdboden einschraubbaren oder einschlagbaren Dorn (25) verankerbar ist.

3. Niederschlagsmeßgerät nach Anspruch 2,
d a d u r c h   g e k e n n z e i c h n e t ,
daß der Tragkörper (1;31) ein in Verankerungsstellung senkrechtes Rohr ist, an dem eine auf dem Erdboden aufliegende Bodenplatte (19) befestigt ist.

4. Niederschlagsmeßgerät nach Anspruch 3,
d a d u r c h   g e k e n n z e i c h n e t ,

daß am oberen Ende des Tragkörpers (1;31) und an der Bodenplatte (19;34) je ein Meßfühler (11,21; 53,54) für die Luft- bzw. Bodentemperatur angeordnet ist.

5. Niederschlagsmeßgerät nach Anspruch 3 oder 4, dadurch gekennzeichnet, daß die Bodenplatte (19) als Elektrode ausgebildet ist.

6. Niederschlagsmeßgerät nach einem der Ansprüche 1 bis 5, dadurch gekennzeichnet, daß der höhenverstellbare Arm (2;32) biegbar ist, so daß die mindestens eine an ihm angeordnete Elektrode (3;33, 44) sich in jeder Stellung des Arms nach unten richten läßt.

7. Niederschlagsmeßgerät nach Anspruch 6, dadurch gekennzeichnet, daß der höhenverstellbare Arm (2) insgesamt schwanenhalsartig biegbar ist.

8. Niederschlagsmeßgerät nach Anspruch 6, dadurch gekennzeichnet, daß der höhenverstellbare Arm (32) zwei Biegegelenke (39, 41) aufweist.

9. Niederschlagsmeßgerät nach einem der Ansprüche 1 bis 8, dadurch gekennzeichnet, daß die Elektroden (33,44) paarweise am höhenverstellbaren Arm (32) angeordnet sind und mindestens eine Elektrode des bzw. jedes Paars elektrisch beheizbar ist.

10. Niederschlagsmeßgerät nach Anspruch 9, dadurch gekennzeichnet,

daß beide Elektroden (33,44) nach unten abgewinkelt und mit Ausnahme ihrer freien Enden (51,52) elektrisch isoliert sind.

5676

83106445.6
0099498
Lang, Heinz

FIG. 1

FIG. 2

83106445.6
0099498
Lang, Heinz

FIG. 5

FIG. 4

FIG. 3